# EUROPEAN PATENT APPLICATION

(11) **EP 4 520 504 A1**
(43) Date of publication of application: **12.03.2025**
(21) Application number: 22940853.9
(22) Date of filing: 24.06.2022
(51) Int. Cl.: B29C 45/76, B29C 45/73, B29C 45/78, B29C 45/80, H04W 88/02, H01F 7/00

(54) **SENSING DEVICE FOR QUALITY CONTROL OF MOLDED PRODUCT**

(30) Priority: 02.05.2022 KR 20220054121
(71) Applicant: Emoldino Inc., Seoul 04637 (KR)
(72) Inventor: LEE, Young-hwa, Seoul 04969 (KR)
(74) Representative: Spengler, Robert
(86) International application number: PCT/KR2022/008987
(87) International publication number: WO 2023/214612

(57) **Abstract**

The present disclosure relates to a sensing device for quality management of molded products in which a haul sensor counting the number of times of mold-opening is fixedly installed on a controlling Printed Circuit Board (PCB) in a sensor module, a temperature sensor and an acceleration sensor for quality management of molded products are fixedly installed on a measuring PCB, and a Microcontroller Unit (MCU) and a memory equipped with a control algorithm are fixedly installed on the controlling PCB.

## Description

### [Technical Field]

The present disclosure relates to a sensing device that is fixed on a mold and composed of a magnet unit and a sensor module to obtain production information of molded products. In more detail, the present disclosure relates to a sensing device in which a hall sensor counting the number of times of mold-opening is fixedly installed on a controlling Printed Circuit Board (PCB) in a sensor module, a temperature sensor and an acceleration sensor for quality management of molded products are fixedly installed on a measuring PCB, and a Microcontroller Unit (MCU) and a memory equipped with a control algorithm are fixedly installed on the controlling PCB, thereby easily managing the quality of molded products.

### [Background Art]

Plastic injection molding relating to the present disclosure is described.

Recently, business models of the manufacturing industry that were configured and operated in the unit of small-size area in the past have been developed into a global business chain in the unit of large area such as country to country with construction of a global network and globalization of relevant markets.

Accordingly, the relationship between an OEM that is the subject of production and a supplier that is an executor of production have changed into a global relationship from a small-size local relationship, and accordingly, it is limitative to manage a manufacturing chain through the conventional production management method of a spreadsheet type that were managed by recording and input by workers.

In order to solve this problem, the demand for a technology of managing a manufacturing chain by measuring temperature and time during production by applying a sensing device that is mounted on a mold, which is a main manufacturing medium in the manufacturing process, and obtains production information (e.g., a mold counter, a shot counter, an IoT sensing module, an edge sensing module, etc.), etc., has been increased.

However, according to sensing devices to which the related art is applied, another substance (plastic, air, etc. for a sensing device case) exists between a measuring subject, which measures temperature in the sensing devices, and a mold, so heat transferring from a mold is not fully received and a loss of heat is generated, whereby it is difficult to measure accurate temperature and there is a large difference from the actual temperature of the surface of a mold.

Accordingly, the related art has a problem that it is impossible to accurately recognize variation of temperature that is generated in the production process of molded products and it is difficult to analyze the quality of molded products using temperature variation of a mold.

A configuration that counts the number of operation of a mold using any one or a combination of two or more of a magnet sensor, which is a shot sensor, a temperature sensor, and a shock sensor has been disclosed in Korean Patent No. 10-2266747, but a sensing device for quality management of molded products is not sufficiently disclosed.

Further, a method and a means about using what sensor, obtaining what signal, and how to manage the quality of products, which are manufactured through a mold, are not disclosed in detail.

It is described In Japanese Patent Application Publication Nos. 5551243 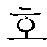 (B2) and 2018-128876 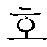 (A) to employ shot sensor as a magnetic sensor, include various sensors, and record and store information for operation of a mold in a forming press, but a sensing device for efficient quality management of molded products is not sufficiently disclosed.

However, a method and a means about using what sensor, obtaining what signal, and how to manage the quality of products, which are manufactured through corresponding molds, are not disclosed in detail in the prior arts described above.

In consideration of the problems in the related art described above, the present disclosure provides a sensor module that can analyze the manufacturing process of products in real time by detecting the temperature variation of a mold and the magnitude of the amplitude of a vibration signal, which is generated by temperature variation of a mold and the pressure of resin that is injected into the mold, and the interval of vibration signals that are generated.

### [Disclosure]

### [Technical Problem]

An objective of the present disclosure is to provide a sensing device that can measure and analyze temperature variation of a mold and a vibration signal by fixedly installing a temperature sensor and an acceleration sensor on a same measuring circuit board, installing the circuit board equipped with the temperature and acceleration sensors in close contact with a sensor module bottom case made of metal material of a sensor module, and fixing the bottom case of the sensor module equipped with the circuit board in close contact with a mold such that heat generated by the mold is transmitted to the temperature sensor while a loss of heat is minimized and a vibration signal generated by the mold is directly transmitted to the acceleration sensor.

Another objective of the present disclosure is to provide a sensing device that can manage the quality of molded products by processing a signal and a temperature, which are measured by a haul sensor, a temperature sensor, and/or an acceleration sensor disposed in a sensor module, as data for analysis by executing a control algorithm in an MCU mounted on a controlling Printed Circuit Board (PCB), and then by transmitting the data to a terminal through Bluetooth communication, etc.

Another objective of the present disclosure is to provide a sensing device that divides a product production period into a preheating period, a cooling period, producing period, and a non-producing period on the basis of a classification algorithm mounted on a controlling PCB in relation to temperature data of a mold collected by a temperature sensor disposed in a sensor module, and determines products, which are produced in the preheating period, the cooling period, and the non-producing period, as poor products or products with a possibility of a problem.

Another objective of the present disclosure is to provide a sensing device in which a sensor module bottom case, a measuring PCB on which a temperature sensor and an acceleration sensor are fixedly installed, and a mold are fixed in contact with each other and a sensing module is fixedly installed on the surface of the mold such that a temperature and a vibration signal of the mold is quickly and directly transmitted.

Another objective of the present disclosure is to provide a sensing device of which the accuracy of operation is increased by fixedly installing a hall sensor disposed in a sensor module on a side of a controlling PCB equipped with an MCU and a control algorithm and fixedly installing a magnet unit at a moving side of a mold such that the hall sensor and the magnet unit are as close to each other as possible because the magnetic intensity of the magnet unit decreases in inverse proportion to the cube of the distance from the hall sensor.

Another objective of the present disclosure is to provide a sensing device that increases the durability of electronic parts and has high accuracy of operation by installing an insulating plate under a battery-fixing member of a sensor module such that a use temperature limit of a battery is not exceeded by minimizing heat transferring to the battery, and by fixing a haul sensor, a liquid crystal display, an operation button, an MCU, and electronic parts for control on a controlling PCB over the sensor module such that a predetermined distance is maintained from a mold surface.

### [Technical Solution]

An objective of the present disclosure is to provide a sensing device including: a sensor fixedly installed on a mold to count the number of times of mold-opening; and a temperature sensor and a sensor that are fixedly installed in a sensor module to sense temperature and vibration of the mold, respectively, for quality management of a molded product.

Another objective of the present disclosure is to provide a sensing device in which the sensor for counting the number of times of mold-opening is composed of a magnet consuming a small amount of power and a magnetic sensor configured as a hall sensor, a magnet unit having a magnet therein is fixedly installed on a moving-side mold, and the sensor module having the hall sensor therein is fixedly installed in a fixed-side mold.

Another objective of the present disclosure is to provide a sensing device in which the intensity of the magnetism of the magnet installed in the magnet unit decreases in inverse proportion to the cube of a distance and magnetic flux density decreases at high temperature, so the magnet unit and the sensor module having the hall sensor therein are fixedly installed within a set distance and the magnet installed in the magnet unit is maintained with a predetermined gap from the mold sensor, thereby increasing reliability and accuracy.

Another objective of the present disclosure is to provide a sensing device in which the temperature sensor for measuring surface temperature of the mold and an acceleration sensor for sensing vibration of the mold are fixedly installed on a measuring PCB, the measuring PCB is fixedly installed in an sensor module bottom case to directly measure surface temperature of the mold, and a material of the sensor module bottom case is a metallic material that is the same as the mold or has thermal conductivity higher than a mold material.

Another objective of the present disclosure is to provide a sensing device that increases the durability of electronic parts and has high accuracy of operation by installing an insulating plate under a battery fixing member of a sensor module such that a use temperature limit of the battery is not exceeded by minimizing heat transferring to the battery, and by fixing a hall sensor, a liquid crystal display, an operation button, an MCU, and electronic parts for control on a controlling PCB over the sensor module such that a predetermined distance is maintained from the mold surface, thereby decreasing a surrounding temperature and increasing durability and accuracy in operation of the electronic parts.

Another objective of the present disclosure is to provide a sensing device in which a battery for supplying electrical energy to electronic parts disposed in the sensor module is fixedly installed on a battery-fixing member between the measuring PCB and the controlling PCB and an insulating plate is fixedly installed under the battery-fixing member to prevent a use temperature limit of the battery from being exceeded by minimizing heat transferring to the battery.

Another objective of the present disclosure is to provide a sensing device in which a liquid crystal display for displaying sensor module information is fixedly installed at an upper portion of a sensor module case, a button for operating the sensor module is fixedly installed at the upper portion of the sensor module case and is configured to perform one or more functions of displaying the final number of shots, a mold-closing state, a battery level, communication sensitivity between a terminal and a controller, an installation state, and whether there is stored data

Another objective of the present disclosure is to provide a sensing device including a button for checking installation of the sensor module fixedly installed on the sensor module bottom case and installed toward the mold surface to be able to check installation of the sensor module on the mold surface or sense separation of the sensor module from the mold.

Another objective of the present disclosure is to provide a sensing device in which a Bluetooth or proximity wireless communication means that processes data, which is obtained by processing the number of mold-opening, temperature, and a vibration signal measured by sensors in accordance with a predetermined procedure in an MCU and a control algorithm mounted on a memory, transmits the data to an external device outside, and receives data transmitted from the outside is disposed in the sensor module.

### [Advantageous Effects]

The present disclosure has an improved effect that it is possible to measure accurate mold temperature and vibration signal because temperature of a mold and vibration of a mold are quickly and directly transmitted by installing a sensing device on a mold such that a sensor module bottom case, a measuring PCB on which a temperature sensor and an acceleration sensor are fixedly installed, and a mold are fixed in contact with each other.

As another effect of the present disclosure, it is possible to increase the accuracy of operation by configuring disposition in consideration of the fact that a haul sensor disposed in a sensor module is fixedly installed on a side of a controlling PCB equipped with an MCU and a control algorithm, the magnetic intensity between a magnet unit and the hall sensor fixedly installed at an operating side of a mold decreases in inverse proportion to the cube of a distance, magnetic flux density decreases at high temperature.

As another effect of the present disclosure, it is possible to increase the durability of electronic parts and accuracy of operation by installing an insulating plate under a battery fixing member of a sensor module such that a use temperature limit of the battery is not exceeded by minimizing heat transferring to the battery, and by fixing a hall sensor, a liquid crystal display, an operation button, an MCU, and electronic parts for control on a controlling PCB over the sensor module such that a predetermined distance is maintained from the mold surface.

As another effect of the present disclosure, it is possible to reduce the capacity for storing data and improve a processing speed because a controlling PCB on which an MCU and a control algorithm are mounted performs data processing on a signal and temperature measured by a temperature sensor and/or an acceleration sensor in accordance with a predetermined procedure through the MCU and the control algorithm mounted on the controlling PCB and then transmits the data to a server or a cloud server through a terminal using Bluetooth communication, etc.

### [Description of Drawings]

FIG. 1 shows one embodiment of a sensing device composed of a sensor module and a magnet unit.
FIG. 2 is an exploded view showing the internal structure of the sensor module 100 of FIG. 1.
FIG. 3 is an exploded view of the magnet unit 200 of FIG. 1.
FIG. 4 is a cross-sectional view showing the state in which a sensor module is mounted on the surface of a mold 300.
FIG. 5 compares measured temperature of a sensing device to which a mold temperature measurement method of the present disclosure is applied and an actual surface temperature of a mold.
FIG. 6 is a flowchart showing a process in which a signal measured by a sensing device is transmitted to a server/cloud server 700 through a data transmission/reception terminal 600 through a controller.
FIG. 7 is a conceptual view showing a type and a method of pattern analysis of mold temperature data measured through a sensing device.
FIG. 8 shows a period of a molding manufacturing producing period classified through analysis of a measured temperature pattern of a mold.
FIG. 9 is a conceptual view showing the case in which mold temperature variation is generated in a producing period 803 of FIG. 6.
FIG. 10 is a view showing a vibration signal of a mold measured by an acceleration sensor disposed in a sensor module.
FIG. 11 is a view showing different process steps in accordance with a recording point in time of data in which an amplitude magnitude value of a vibration signal measured by an acceleration sensor shows the characteristic of each process step of a producing process.
FIG. 12 is a view analyzing and showing necessary time of each process step on the basis of a collected vibration signal.

### [Best Mode]

An objective of the present disclosure is to provide a sensing device composed of a sensor fixedly installed on a mold to count the number of time of mold-opening, a temperature sensor and a sensor that are fixedly installed in a sensor module to sense temperature and sense vibration of the mold, respectively, for quality management of a molded product.

### [Mode for Invention]

Details for implementing the present disclosure are described.

The present disclosure includes a sensing device composed of a magnet unit and a sensor module fixedly installed on a mold to obtain molded product production information, in which the sensor module is composed of a hall sensor that counts the number of times of mold-opening and a measuring Printed Circuit Board(PCB) to which a temperature sensor and an acceleration sensor for quality management of products are fixedly installed.

The hall sensor is fixedly installed on a controlling PCB in which a Microcontroller Unit and a memory equipped with a control algorithm are disposed and processes data in accordance with a predetermined procedure by the MCU and the control algorithm mounted on the memory, and then the processed data is transmitted to a terminal through Bluetooth communication, etc.

The sensor module is fixedly installed at a fixing side of a mold and the magnet unit is fixedly installed at a moving side at a predetermined distance from the sensor module and is configured to count the number of times of mold-opening.

A detailed embodiment of the present disclosure is described.

### <Embodiment>

A detailed embodiment of the present disclosure is described on the basis of drawings.

Disposition and functions of components constituting the sensing device of the present disclosure are described.

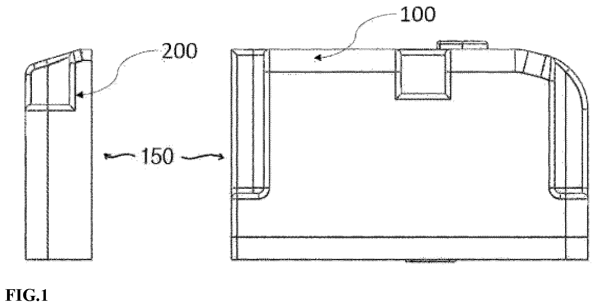

FIG. 1 shows one embodiment of a sensing device composed of a sensor module and a magnet unit.

As in FIG. 1, a 'sensing module' in the specification of the present disclosure is composed of a 'magnet unit' and a 'sensor module' and the sensor module accommodates a hall sensor, a temperature sensor, an acceleration sensor, a battery, a measuring PCB, and a controlling PCB.

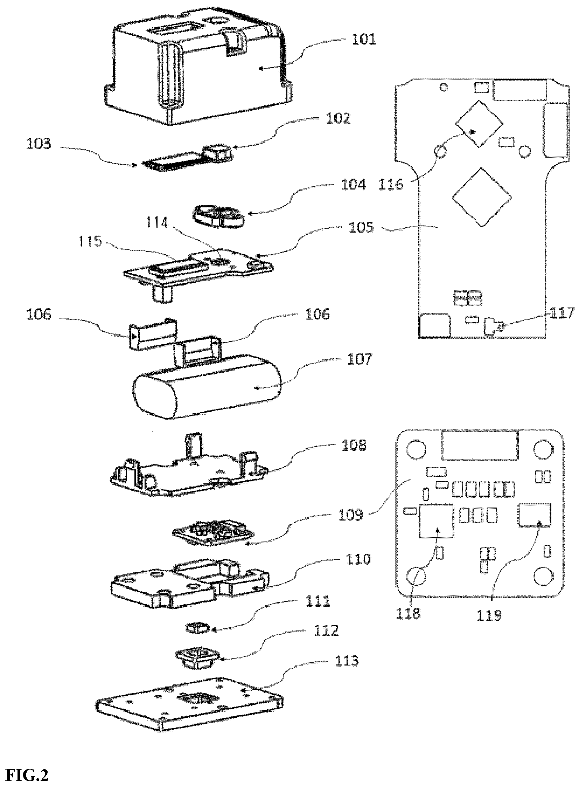

FIG. 2 is an exploded view showing the internal structure of the sensor module (100 in FIG. 1) of the sensing device (150 in FIG. 1) of FIG. 1.

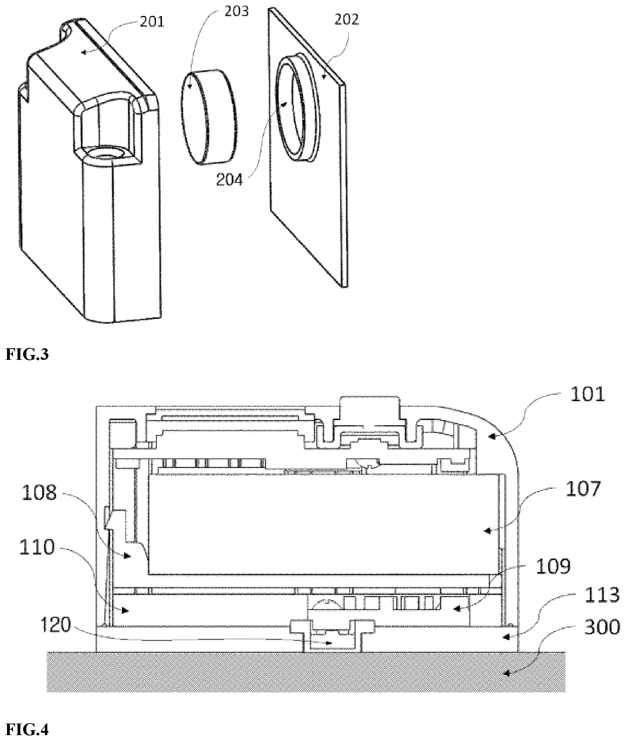

FIG. 3 is an exploded view of a magnet unit 200 of FIG. 1.

The magnet unit is composed of a magnet body (201 in FIG. 3), a magnet unit cover (202 in FIG. 3), and a magnet (203 in FIG. 3), and it is preferable that the magnet is made of neodymium of which the intensity of magnetism is strong.

In more detail, the configuration of the sensor module (100 in FIG. 1) is described.

Components that are described in the description of reference numerals in the specification of the present disclosure but are not stated in detail are expressed such that it is possible to easily know what functions corresponding configurations have, so they are not described in detail.

Terms 'upper', 'lower', etc. in the specification of the present disclosure are described on the basis of drawings, and may be changed in various ways when the drawings are changed.

The present disclosure includes a sensing device (150 in FIG. 1) composed of a magnet unit (200 in FIG. 1) and a sensor module (100 in FIG. 1) mounted on a mold to obtain molded product production information, in which the sensor module (100 in FIG. 1) is composed of a haul sensor that counts the number of times of mold-opening and a measuring PCB to which a temperature sensor and an acceleration sensor for quality management of a molded product are fixedly installed

A temperature sensor, an acceleration sensor, a hall sensor of a magnetic sensor, a measuring PCB to which the temperature sensor and the acceleration sensor are fixedly installed, a battery (107 in FIG. 2), a controlling PCB on which an MCU and a memory equipped with a control algorithm are disposed, etc. are disposed in the sensor module (100 in FIG. 1) described in the specification of the present disclosure.

The temperature sensor (119 in FIG. 2) and the acceleration sensor (118 in FIG. 2) of the sensor module (100 in FIG. 1) are fixedly installed on the measuring PCB (109 in FIG. 2) and fixedly installed on a sensor module bottom case (113 in FIG. 2), and the sensor module bottom case (113 in FIG. 2) is firmly fixedly installed in contact with a mold.

The sensor module (100 in FIG. 1) according to the present disclosure uses the magnetic sensor to count the number of times of mold-opening and can use a temperature and/or vibration signal detected by the temperature sensor and the acceleration sensor to monitor quality management of a molded product in real time by analyzing the temperature and/or vibration signal.

The magnetic sensor is composed of a magnet and a hall sensor and it is preferable that the magnet unit in which a permanent magnet is disposed is fixedly installed at a moving side of a mold and the hall sensor disposed in the sensor module is fixedly installed at a fixed side of the mold.

It is preferable to use the magnet sensor as a sensor for counting the number of tome of mold-opening in consideration of the power consumption of a battery, but an optical sensor, etc. may be used if necessary for various reasons.

In FIG. 2, it is preferable that the hall sensor disposed in the sensor module (100 in FIG. 1) is fixedly installed at a side of the controlling PCB, but the hall sensor may be separated or fixedly installed at another position in consideration of the distance between the internal accommodation space and the magnet.

Since the intensity of the magnetism of the magnet (200 in FIG. 1) decreases in inverse proportion to the cube of the distance in the magnetic sensor, the distance between the magnet unit and the hall sensor is important for accurate operation, and accurate operation is possible only when the distance between the magnet unit and the hall sensor is maintained at a predetermined distance.

The intensity of the magnetism of the magnet (e.g., neodymium) of the magnet unit decreases at high temperature due to reduction of magnetic flux density, so it is preferable to fixedly install the magnet slightly far from the surface of a mold.

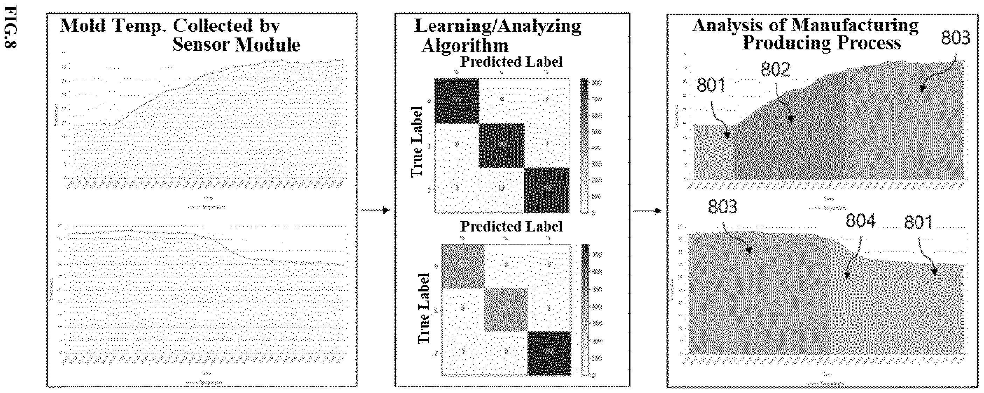

Referring to FIG. 8 in relation to this, the temperature of a mold surface is not higher than 60°C and is fortunately temperature that is not greatly concerned.

FIG. 3 is an exploded view of the magnet unit, in which the magnet unit is composed of a magnet body (201 in FIG. 3), a magnet unit cover (202 in FIG. 3), and a magnet (203 in FIG. 3), and it is preferable that the magnet is made of neodymium.

In FIG. 3, it is preferable to assemble and manufacture the magnet unit by coupling the magnet to the magnet unit body (201 in FIG. 3) by inserting the magnet into a magnet accommodation groove (204 in FIG. 3) formed at a middle upper portion of the magnet unit cover (202 in FIG. 3), and it is preferable to dispose the position of the hall sensor (117 in FIG. 2), which is fixedly installed in the sensor module, in consideration of the position of the magnet.

That is, since the intensity of the magnetism of the magnet decreases in inverse proportion to the cube of a distance and the magnetic flux density decreases at high temperature, it is preferable to fix and install the magnet at a predetermined distance from a mold surface in consideration of this fact when designing and manufacturing the magnet unit (200 in FIG. 1).

The magnetic sensor is usually used as a shot count that counts the number of times of mold-opening, but may be used to determine that there is a problem with the quality of a product when the interval and/or cycle between a shot and a shot measured by a clock disposed in the sensor module is shorter than a set time.

That is, the magnetic sensor of the sensor module can also be used as a means for evaluating the quality.

The present disclosure can record and store detection times of signals measured from sensors by disposing a clock at a side of the controlling PCB in the sensor module.

The sizes and shapes of the magnet unit (200 in FIG. 1) and/or the sensor module (100 in FIG. 1) shown in FIG. 1 and FIG. 2 are examples according to the present disclosure, and they may be modified, designed, and manufactured in various ways in consideration of the disposition of the accommodated parts, the sizes of the measuring PCB and the controlling PCB, etc.

As another embodiment of the present disclosure, it is possible to quickly and accurately measure the temperature of a mold surface by minimizing a loss of heat transfer between the mold surface and the temperature sensor in the sensor module (100 in FIG. 1) by manufacturing the sensor module bottom case 113 using a metallic material the same as or similar to the surface of the mold to be measured.

Further, on the basis of this configuration, it is possible to more accurately analyze the quality of a product that is manufactured through molding on the basis of temperature measured through the sensor module (100 in FIG. 1) fixedly installed on a mold.

As another embodiment of the present disclosure, as in FIG. 4, the temperature sensor and the acceleration sensor are fixedly installed on the measuring PCB (109 in FIG. 4) and are fixed on the sensor module bottom case (111 in FIG. 4) and it is preferable that the sensor module bottom case (111 in FIG. 4) is firmly fixedly installed in direct contact with a mold.

In the configuration in which a mold surface and the sensor module bottom case 113 are in direct contact or substantially in direct contact with each other, there is an improved effect that the temperature of a mold measured by the temperature sensor (119 in FIG. 2) and vibration signals measured by the acceleration sensor (118 in FIG. 2) can be detected as temperature and vibration signals that are almost the same as surface temperature of the mold and a vibration signal of the mold.

As shown in FIG. 2, the sensor module for quality management of a molded product is composed of a sensor module bottom case 113 for transmitting heat of a mold surface to a temperature measurement medium without a loss, a measuring PCB (109 in FIG. 2) on which a temperature sensor for measuring temperature and an acceleration sensor for detecting a vibration signal are mounted, a battery, a liquid crystal display, a controlling PCB 105 equipped with an MCU and a control algorithm to process measured information, a sensor module top case 101, etc.

As described above, it is preferable that the controlling PCB (105 in FIG. 2) on which the hall sensor installed in consideration of the magnet, an operation button (102 in FIG. 2), and the liquid crystal display (115 in FIG. 2) are fixedly installed is fixedly installed at an upper portion in a sensor module case, as in FIG. 4, and the temperature sensor (119 in FIG. 2) measuring temperature and/or the acceleration sensor (118 in FIG. 2) measuring a vibration signal are fixedly installed on the measuring PCB (109 in FIG. 2) and fixedly installed on the sensor module bottom case 113.

The liquid crystal display (115 in FIG. 2) displays information to be displayed using alphabets, numbers, special characters, etc., and can display the final number of shots (accumulated count), a mold-closing state, a battery level, communication sensitivity between a terminal and a controller, an installation state, whether there is stored data, etc.

The liquid crystal display (115 in FIG. 2) is an abbreviated name and is also referred to as a 'liquid crystal display for displaying information' and a 'liquid crystal display for displaying sensor module information, and they have the same meaning.

It is preferable to fixedly install the temperature sensor (119 in FIG. 2) and the acceleration sensor (118 in FIG. 2) on the same measuring PCB (109 in FIG. 2), as in FIG. 2, in order to reduce an installation space and easily assemble them, but they may be separately manufactured.

A signal and temperature measured by the hall sensor, the temperature sensor, and/or the acceleration sensor undergo a predetermined data processing procedure by executing a predetermined program at the MCU and the memory equipped with a control algorithm, and then can be transmitted to a terminal through various communication means such as Bluetooth communication in the sensor module.

In FIG. 4, the sensor module bottom case 113, the measuring PCB 109, and the mold 300 are disposed, as in FIG. 4, whereby the sensor module is fixedly installed on the mold in a contact type of them.

The sensor module bottom case 113 and the mold 300 are installed in direct contact with each other and they are firmly fixedly installed using a bolt or a magnet such that the contact surfaces are continuously firmly maintained.

Further, the sensor module bottom case 113 and the measuring PCB 109 are also fixedly installed in direct contact with each other and it is preferable to firmly fixedly install them using a common fastener such as a bolt such that the contact surfaces can be continuously maintained.

Since common molds are made of metallic materials having high temperature conductivity, it is preferable that the sensor module bottom case 113 is also made of the same metallic material as the mold, but the sensor module bottom case 113 may be made of a metallic material having thermal conductivity higher than the material of the mold.

Accordingly, since the sensor module bottom case (113 in FIG. 2) has thermal conductivity similar to or the same as the mold, it can receive heat from the mold with a minimized loss of heat and shows temperature similar to or the same as the mold in measuring.

In FIG. 4, a button (120 in FIG. 4) for checking installation of the sensor module is installed at a side of the sensor module bottom case toward the mold surface to show that the sensor module is installed on the mold surface.

The button (120 in FIG. 4) for checking installation of the sensor module serves to generate and transmit a signal from the controller to the terminal through Bluetooth communication when the sensor module is separated from the mold surface such that a manager can always check it through various wireless communication means including internet WiFi.

The button (120 in FIG. 4) for checking installation of the sensor module may be made perform the same function by installing a contact sensor or a proximity sensor at a side of the sensor module.

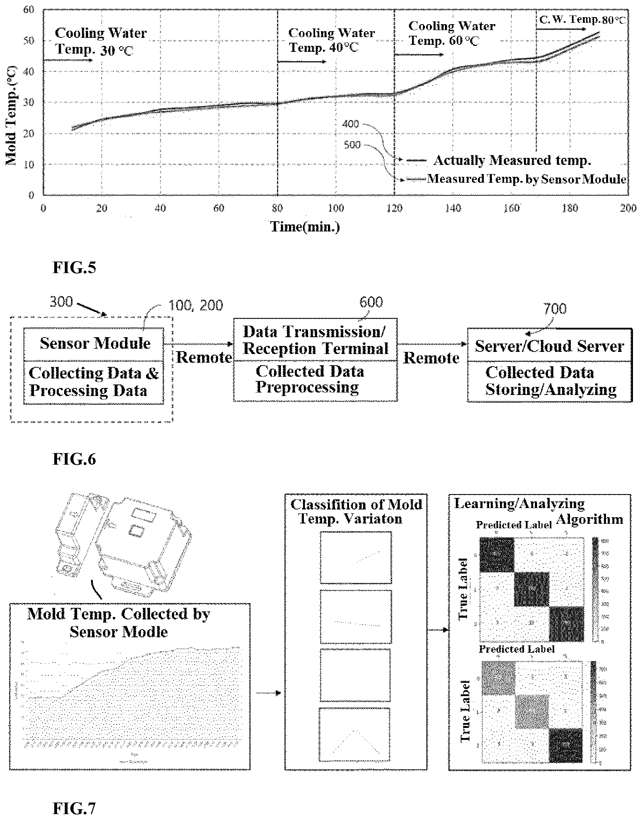

As in FIG. 4, heat of a mold surface transfers to the measuring PCB 109 being in direct contact with the sensor module bottom case (111 in FIG. 4), and the temperature sensor (119 in FIG. 2) in the measuring PCB 109 measures temperature. In this case, temperature similar to or the same as the temperature of the mold surface is measured, as in FIG. 5.

Since the acceleration sensor fixedly installed on the measuring PCB 109 is also fixedly installed on the sensor module bottom case (113 in FIG. 2), it can receive a vibration signal generated in each process step with a minimum loss of a vibration signal that is transmitted from the mold when a reduction ratio is similar to or lower than the mold, so there is an improved effect that it is possible to accurately distinguish and measure variation of vibration signals in the steps, respectively.

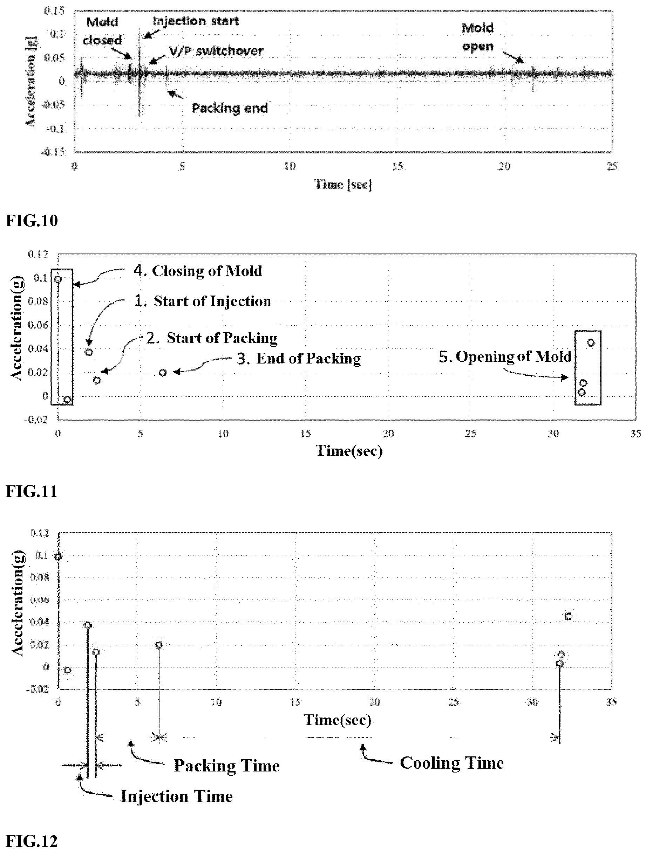

FIG. 10 is a view showing a vibration signal of a mold measured by an acceleration sensor disposed in a sensor module.

As in FIG. 11, a vibration signal of a mold is transmitted to the measuring PCB 109 being in direct contact with the sensor module bottom case (113 in FIG. 2) and the acceleration sensor (118 in FIG. 2) in the measuring PCB 109 can measure the vibration signal transmitted from the mold with a specific peak value like the signal shown in FIG. 11.

In this case, as in FIG. 12, variation of vibration generated in each step of the process is measured as a vibration signal through the acceleration sensor (118 in FIG. 2) in the sensor module and specific peak values are extracted by the algorithm mounted on the controlling PCB 105 in the sensor module, arranged in a data array, and stored in the memory.

The controlling PCB (105 in FIG. 2) in the sensor module is fixedly installed at the upper portion in the sensor module to maintain a predetermined gap (distance) from a high-temperature mold surface, thereby being able to increase the durability of electronic parts fixed on the controlling PCB on which the hall sensor is installed and to increase accuracy of the operation of the magnetic sensor by decreasing and maintaining the distance between the magnet and the hall sensor.

The acceleration sensor in the sensor module mounted on a mold may be configured as a system that collects vibration signals of the mold from the measuring PCB (109 in FIG. 2), as in FIG. 10, at predetermined time intervals or in real time by executing the control program mounted on the controlling PCB (105 in FIG. 2), converts measured signals into specific peak values of the vibration signals measured in process steps, respectively, and transmits data to a server, a computer, or a cloud server (700 in FIG. 6) through a data transmission/reception terminal (600 in FIG. 6) shown in FIG. 6.

The peak value of a vibration signal means a value showing closing of a mold, opening of a mold, start of injection, start of packing, end of packing, etc. in a vibration signal (FIG. 10) measured by an acceleration sensor.

The controlling PCB (105 in FIG. 2) described in the specification of the present disclosure is equipped with a control program designed and made in accordance with the present disclosure and controls the sensing device by executing the mounted control program through an MCU, so it can be referred to as a 'controller'.

It is preferable that the controlling PCB (105 in FIG. 2) is equipped with program firmware for operating the MCU and the sensing device and is preferably configured to make data collected by the measuring PCB (109 in FIG. 2) into one data array through a firmware algorithm and to make data be transmitted and received from a controller to a terminal through wireless communication (e.g., Bluetooth).

The controlling PCB (105 in FIG. 2) and the measuring PCB (109 in FIG. 2) are connected through a flexible cable to transmit and receive signals (information).

A management server, a server, or an Amazon cloud server (700 in FIG. 6) records and stores data transmitted from the controller of the sensing device into a memory and/or a database.

In FIG. 8, a measured temperature is classified into patterns 801, 802, 803, and 804 such as an increase, reduction, stability, fluctuation in accordance with variation, and learning and analyzing is performed, as in FIG. 7, using a mathematical statistic tool/algorithm or an AI/ML algorithm.

In accordance with collected temperature data, a molded product production period is divided into a preheating period 802, a cooling period 804, a producing period 803, and a non-producing period 801, as in FIG. 8, on the basis of a classification algorithm mounted on the controlling PCB.

In FIG. 8, molded products that are produced in the preheating period 802, the cooling period 804, and the non-producing period 801 are determined as poor products or molded products with a possibility of a problem and are excluded from the quantity of good products.

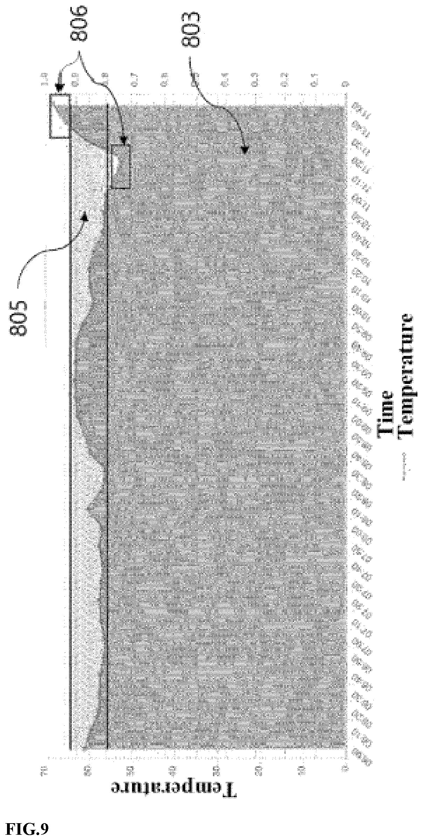

A case in which the temperature of a mold changes out of a set normal temperature (806 in FIG. 8), as in FIG. 9, occurs also in the producing period (803 in FIG. 8) of FIG. 8, and in this case, deviations are analyzed through comparison with the level of data classified as a stable pattern (805 in FIG. 8) and products produced at abnormal temperature are determined as poor products or products with a possibility of a problem and excluded from the quantity of good products.

The magnitude value of a vibration signal measured by an acceleration sensor recorded in FIG. 11 shows the characteristic of each process step of a producing process and shows different process steps in accordance with a recording point in time of data.

In FIG. 11, the magnitude of the signal at the point in time of start of injection of No. 1 is changed in accordance with an injection speed set in the process, and as the injection speed is increased, the force for driving the molding machine and the shock that is generated when a material is injected into a mold are increased, so the amplitude magnitude of a vibration signal is increased.

In FIG. 11, the signal at the point in time of start of packing or switch of packing of No. 2 depends on the difference between the magnitudes of injection pressure and packing pressure, and the larger the difference of the magnitudes, the larger the amplitude magnitude of a vibration signal.

The point in time of start of packing or switch of packing is a process of forcibly controlling pressure from injection pressure to packing pressure, and the larger the pressure difference, the larger the amplitude magnitude of a vibration signal.

In FIG. 11, the signal at the point in time of end of packing or start of cooling of No. 3 depends on the difference between the magnitude of packing pressure and the magnitude of back pressure, and the larger the difference of the magnitudes, the larger the amplitude magnitude of a vibration signal.

No. 4 and No. 5 in FIG. 11 show vibration signals measured due to operation of opening and closing of a mold, in which No. 4 shows the amplitude magnitude of a vibration signal generated when a mold is closed (mold-closing) and No. 5 shows the amplitude magnitude of a vibration signal generated when a mold is opened (mold-opening).

On the basis of this, it is possible to count the number of shots by counting mold-opening signals and mold-closing signals from a vibration signal measured by an acceleration sensor, and the signal intervals between a mold-opening signal and a mold-closing signal are measured and compared in real time, so it is also possible to evaluate the quality of a molded product.

Accordingly, it is possible to find out pressure variation in each process step in an injection molding process by analyzing the amplitude magnitude value of a vibration signal measured through the sensor module.

FIG. 12 is a view showing a necessary time of each process step according to the measurement point in time of the amplitude magnitude of a vibration signal measured by the acceleration sensor of FIG. 11.

The time difference between the points in time of start of injection and start of packing means an injection time as the necessary time of the injection step, and the time difference between the points in time of start of packing and end of packing means a packing time that is the necessary time of the packing step.

The time difference between the point in time of end of packing and the mold-opening point in time at which a mold is opened means a cooling time as a necessary time of the cooling step.

Data transmitted to and recorded and stored in a management server, a server, or a cloud server is classified into production of good products and production with a possibility of a defect or a problem of molded product production through a statistical algorithm or an AI/ML algorithm, and it is possible to analyze productivity and the defect rate on the basis of the classification.

FIG. 11 is a view showing a process of analyzing amplitude magnitude data of a measured vibration signal through a statistical algorithm. When a disturbance of data is generated, it is possible to determine this as production with a possibility of a defect or a problem and distinguish this from production of good products on the basis of the amplitude magnitude of vibration signals measured, recorded, and stored before and the time analysis data between vibration signals.

The protective range of the present disclosure is described with reference to the above description.

One embodiment of the present disclosure is a sensing device that is fixedly installed on a mold for quality management of molded products and is composed of a sensor fixedly installed on a mold the count the number of times of mold-opening, and at least one or more of a temperature sensor and a sensor that are fixedly installed in a sensor module to sense temperature and vibration of a mold, respectively, for quality management of a molded product.

As another embodiment of the present disclosure, the sensor for counting the number of times of mold-opening is composed of a magnet consuming a small amount of power and a magnetic sensor configured as a haul sensor, a magnet unit having a magnet therein is fixedly installed on a moving-side mold, and a sensor module having the haul sensor therein is fixedly installed in a fixed-side mold.

In another embodiment of the present disclosure, the intensity of the magnetism of a magnet installed in a magnet unit decreases in inverse proportion to the cube of a distance and the magnetic flux density decreases at high temperature, so the magnet unit and a sensor module having a haul sensor therein are fixedly installed within a set distance, and the haul sensor is disposed and installed on a controlling PCB in consideration of the distance from the magnet of the magnet unit and is fixedly installed at an upper portion of a sensor module case such that a predetermined gap from a mold surface is maintained and the distance from the magnet is also decreased.

As another embodiment of the present disclosure, a temperature sensor for measuring surface temperature of a mold and a sensor for sensing vibration of a mold are fixedly installed on a measuring PCB, the measuring PCB is fixedly installed on a sensor module bottom case to directly measure the surface temperature of the mold, and the material of the sensor module bottom case is a metallic material that is the same as the mold or has thermal conductivity higher than the mold material.

As another embodiment of the present disclosure, a sensor for sensing vibration of a mold is configured as an acceleration sensor or a vibration sensor that can measure vibration of a mold.

As another embodiment of the present disclosure, a haul sensor is fixedly installed on a controlling PCB at a predetermined distance from a mold surface and there is provided a controller in which an MCU that receives a signal measured by a sensor disposed in a sensor module, converts data through a mounted algorithm, and then transmits the data to an external device, and a memory equipped with a control algorithm are fixedly mounted on a controlling PCB.

In another embodiment of the present disclosure, a battery (107 in FIG. 2) for supplying electrical energy to electronic parts including sensors disposed in a sensor module, an MCU, and a memory equipped with a control algorithm is fixedly installed in the space between a measuring PCB and a controlling PCB (105 in FIG. 2).

The battery (107 in FIG. 2) is fixedly installed on a battery-fixing member (108 in FIG. 2) installed under the battery and a silicon member for fixing the battery is further installed over the battery such that the battery is not separated from the battery-fixing member.

An insulating plate (110 in FIG. 2) installed to prevent a use temperature limit of the battery from being exceeded by minimizing heat transferring to the battery is positioned under the battery-fixing member (108 in FIG. 2), and an insertion space is formed at the right side of the insulating plate (110 in FIG. 2) such that the measuring PCB (109 in FIG. 2) can be directly fastened and fixed to the sensor module bottom case (113 in FIG. 2).

The disposition, shapes, sizes, fasteners, etc. of the components shown in FIG. 2 may be modified, designed, and manufactured in other methods that are generally used.

As another embodiment of the present disclosure, a liquid crystal display (115 in FIG. 2) for displaying sensor module information is fixedly installed at the upper portion of a sensor module case, and a button (120 in FIG. 4) for checking installation of the sensor module is fixedly installed at the upper portion of the sensor module case.

The liquid crystal display (115 in FIG. 2) for displaying sensor module information is configured to be able to display one of the final number of shots, a mold-closing state, a battery level, communication sensitivity between a terminal and a controller, an installation state, and whether there is stored data by operating a button for operating the sensor module.

As another embodiment of the present disclosure, in a sensor module, a Bluetooth or proximity wireless communication means that transmits data, which is obtained by processing the number of mold-opening, temperature, and a vibration signal measured by sensors through a predetermined procedure in an MCU and a control algorithm mounted on a memory, to the outside and receives data transmitted from the outside is installed at a side of a controlling PCB.

As another embodiment of the present disclosure, collected temperature data divides a molded product production period into a preheating period, a cooling period, producing period, and a non-producing period on the basis of a classification algorithm of a control algorithm mounted on a controlling PCB, and there may be provided a configuration that determines products produced in the preheating period, the cooling period, and the non-producing period as poor products or molded products with a possibility of a problem and excludes the products from the quantity of good products.

As another embodiment of the present disclosure, a vibration signal measured by an acceleration sensor or a vibration sensor at the point in time of end of packing or start of cooling depends on the difference between the magnitude of packing pressure and the magnitude of back pressure, and data that makes it possible to determine that there is a problem with the quality of a molded product when the amplitude magnitude of a vibration signal departs from a set magnitude can be obtained.

The protective range described in the specification of the present disclosure can be protected as the right of invention by describing the protective range in various ways on the basis of the above description.

### [Industrial Applicability]

The present disclosure provides a sensing device in which a haul sensor counting the number of times of mold-opening is fixedly installed on a controlling Printed Circuit Board (PCB) in a sensor module, a temperature sensor and an acceleration sensor for quality management of molded products are fixedly installed on a measuring PCB, and a Microcontroller Unit (MCU) and a memory equipped with a control algorithm are fixedly installed on the controlling PCB in order to manage the quality of molded products. Accordingly, it is possible to easily manage the quality of molded products and increase reliability, so the industrial applicability is very high.

### [Description of Reference Numerals]

100 : sensing module 101 : sensor module top case
102 : button for operating sensor module
103 : cover of liquid crystal display for displaying sensor module information
104 : silicon cover of button for operating sensor module
105 : PCB for controlling sensor module
106 : silicon member for fixing sensor module battery
107 : sensor module battery 108 : battery-fixing member
109 : PCB for measuring sensor module 110 : insulating plate
111 : button for checking installation of sensor module 112 : cover of button for checking installation of sensor module
113 : sensor module bottom case 114 : button for operating sensor module
115 : liquid crystal display for displaying sensor module information
116 : operating process (MCU) of controlling PCB
117 : haul sensor 118 : acceleration sensor
119 : temperature sensor 120 : button for checking installation of sensor module
150 : sensing device 200 : magnet unit
201 : magnet unit body 202 : magnet unit cover
203 : magnet 204 : magnet accommodation groove
300 : mold
400 : mold temperature measured by contact-type temperature measurer
500 : mold temperature measured by sensing device
600 : data transmission/reception terminal
700 : server/cloud server
801 : non-producing period based on mold temperature analysis
802 : preheating period based on mold temperature
803 : producing period based on mold temperature
804 : cooling period based on mold temperature
805 : good product-possible period of producing period
806 : period with possibility of defect or problem of producing period

## Claims

1. A sensing device fixedly installed on a mold for quality management of a molded product, the sensing device comprising:
a sensor fixedly installed on a mold surface to count the number of times of mold-opening; and
at least one or more of a temperature sensor and a sensor that are fixedly installed in a sensor module to sense temperature and vibration of the mold, respectively, for quality management of a molded product.

2. The sensing device of claim 1, wherein the sensor for counting the number of times of mold-opening is composed of a magnet consuming a small amount of power and a magnetic sensor configured as a hall sensor.

3. The sensing device of claim 2, wherein a magnet unit having a magnet therein is fixedly installed on a moving-side mold, and
the sensor module having the hall sensor therein is fixedly installed in a fixed-side mold.

4. The sensing device of claim 2 or 3, wherein the intensity of magnetism of the magnet installed in the magnet unit decreases in inverse proportion to the cube of a distance, so the magnet unit and the sensor module having the hall sensor therein are fixedly installed within a set distance,
the hall sensor disposed on a controlling PCB and fixedly installed at an upper portion in the sensor module, and
the magnet installed in the magnet unit is fixedly installed at an upper portion of the magnet unit at a predetermined distance from the mold surface due to a property that magnetic flux density decreases at high temperature.

5. The sensing device of claim 1, wherein the temperature sensor for measuring surface temperature of the mold and the sensor for sensing vibration of the mold are fixedly installed on a measuring PCB,
the measuring PCB is fixedly installed in an sensor module bottom case to directly measure surface temperature of the mold, and
a material of the sensor module bottom case is a metallic material that is the same as the mold or has thermal conductivity higher than a mold material.

6. The sensing device of claim 1, wherein the sensor for sensing vibration of the mold is configured as an acceleration sensor or a vibration sensor that can measure vibration of the mold.

7. The sensing device of claim 2, wherein the hall sensor is fixedly installed at a side of a controlling PCB at a predetermine distance from the mold surface, and
the sensing device comprises a controller in which an MCU that receives signals measured by the sensors disposed in the sensor module, converts data through a mounted algorithm, and then transmits the data to an external device, and a memory equipped with a control algorithm are fixedly mounted on the controlling PCB.

8. The sensing device of claim 1, wherein a battery for supplying electrical energy to electronic parts disposed in the sensor module is fixedly installed on a battery-fixing member positioned between a measuring PCB and a controlling PCB, and
a silicon member for fixing the battery is fixedly installed over the battery such that the battery is not separated from the battery-fixing member.

9. The sensing device of claim 8, wherein an insulating plate is fixedly installed under the battery-fixing member to prevent a use temperature limit of the battery from being exceeded by minimizing heat transferring to the battery.

10. The sensing device of claim 1, wherein a liquid crystal display for displaying sensor module information is fixedly installed in a sensor module top case, and
the liquid crystal display for displaying sensor module information is configured to be able to display one of the final number of shots, a mold-closing state, a battery level, communication sensitivity between a terminal and a controller, an installation state, and whether there is stored data by operating a button for operating the sensor module.

11. The sensing device of claim 5, comprising a button for checking installation of the sensor module fixedly installed on the sensor module bottom case and installed toward the mold surface to be able to check installation of the sensor module on the mold surface or sense separation of the sensor module from the mold.

12. The sensing device of claim 1, wherein a Bluetooth or proximity wireless communication means that transmits data, which is obtained by processing the number of mold-opening, temperature, and a vibration signal measured by sensors through a predetermined procedure in an MCU and a control algorithm mounted on a memory, to an external device and receives data transmitted from the outside is disposed on a controlling PCB in the sensor module.

13. The sensing device of claim 1, wherein collected temperature data divides a molded product production period into a preheating period, a cooling period, producing period, and a non-producing period on the basis of a classification algorithm of a control algorithm mounted on a controlling PCB, and
data, which makes it possible to determine products produced in the preheating period, the cooling period, and the non-producing period as poor products or molded products with a possibility of a problem and exclude the products from the quantity of good products, is obtained.

14. The sensing device of claim 6, wherein a vibration signal measured by the acceleration sensor or the vibration sensor at a point in time of end of packing or start of cooling depends on a difference between a magnitude of packing pressure and a magnitude of back pressure, and data that makes it possible to determine that there is a problem with the quality of a molded product when an amplitude magnitude of a vibration signal departs from a set magnitude is obtained.
